# EUROPÄISCHE PATENTSCHRIFT

(11) **EP 2 705 312 B1**
(45) Veröffentlichungstag und Bekanntmachung des Hinweises auf die Patenterteilung: **30.10.2019**
(21) Anmeldenummer: 12717320.1
(22) Anmeldetag: 27.04.2012
(51) Int. Cl.: F25D 11/02, F25D 29/00

(54) **EINKREIS-KÄLTEGERÄT**
SINGLE-CIRCUIT REFRIGERATION DEVICE
APPAREIL FRIGORIFIQUE À UN SEUL CIRCUIT

(30) Priorität: 04.05.2011 DE 102011075207
(43) Veröffentlichungstag der Anmeldung: 12.03.2014
(73) Patentinhaber: BSH Hausgeräte GmbH, 81739 München (DE)
(72) Erfinder: BUCK, Simon, 89542 Herbrechtingen (DE); IHLE, Hans, 89537 Giengen (DE); NUIDING, Wolfgang, 89537 Giengen (DE)
(86) Internationale Anmeldenummer: PCT/EP2012/057828
(87) Internationale Veröffentlichungsnummer: WO 2012/150196

(56) Entgegenhaltungen:
- EP-A2- 1 541 949
- DE-A1- 4 430 468
- US-A1- 2003 131 618

## Beschreibung

Die vorliegende Erfindung betrifft ein Kältegerät, insbesondere ein Haushaltskältegerät, mit einem Kältemittelkreislauf, in dem ein Verdichter mit wenigstens zwei Verdampfern verbunden ist, die jeweils unterschiedlich temperierten Lagerfächern zugeordnet sind. Es sind unterschiedliche Topologien von Kältemittelkreisläufen für solche Kältegeräte bekannt. So können die Verdampfer in dem Kältemittelkreislauf parallel geschaltet sein, und ein Wegeventil kann vorgesehen sein, um je nachdem, in welchem der Lagerfächer Kühlungsbedarf besteht, einen der beiden Verdampfer mit Kältemittel zu versorgen. Im Gegensatz dazu sind bei den sogenannten Einkreis-Kältegeräten die beiden Verdampfer in Reihe miteinander verbunden, so dass vom Verdichter kommendes Kältemittel zunächst den ersten Verdampfer und anschließend den zweiten Verdampfer durchläuft. Da derartige Kältegeräte kein Wegeventil zum Steuern des Kältemittelflusses benötigen, sind sie robust und preiswert zu fertigen.

Der Betrieb des Verdichters eines solchen Einkreis-Kältegerätes ist üblicherweise anhand eines Temperaturfühlers geregelt, der in dem vom zweiten Verdampfer gekühlten Lagerfach angeordnet ist. Wenn dieser Temperaturfühler Kühlungsbedarf feststellt, dann zirkuliert Kältemittel auch durch den ersten Verdampfer, unabhängig davon, ob dessen Lagerfach auch Kühlungsbedarf hat oder nicht. Damit trotz fehlender Regelung das erste Lagerfach eine geeignete Temperatur annimmt, müssen die Abmessungen der Verdampfer und der Lagerfächer, die Isolationsstärke der Lagerfächer, der Kältemittelmassestrom, die absolute Verdichterlaufzeit und andere Parameter genau aufeinander abgestimmt sein, damit der Kühlungsbedarf des vom ersten Verdampfer gekühlten Lagerfachs gedeckt, aber auch nicht überbefriedigt wird. Doch auch eine sorgfältige Abstimmung ermöglicht einen befriedigenden Betrieb nur innerhalb eines engen Intervalls von Umgebungstemperaturen. Ist die Umgebungstemperatur zu hoch, dann steigt der Kühlungsbedarf des wärmeren Lagerfachs prozentual schneller als der des kälteren, so dass, wenn der Temperaturfühler in dem wärmeren Fach angeordnet ist, die Temperatur des kälteren unter den Sollbereich abfällt. Eine unnötig starke Kühlung führt jedoch zu erhöhtem Energiebedarf. Ist hingegen die Umgebungstemperatur zu niedrig, dann sinkt der Kühlungsbedarf des wärmeren Fachs stärker als der des kälteren.

Die Folge kann eine unzureichende Kühlung des kälteren Fachs sein, wodurch die Haltbarkeit des Kühlguts darin beeinträchtigt werden kann.

Eine seit langem bekannte Lösung dieses Problems ist die sogenannte Winterschaltung. Mit ihr kann ein Benutzer zwischen einem normalen Betriebsmodus und einen Betriebsmodus für kalte Umgebungen umschalten. Im letzteren Betriebsmodus läuft im wärmeren Lagerfach eine Heizung, die dazu führt, dass der Temperaturfühler dieses Fachs häufiger Kühlungsbedarf meldet, als ohne die Heizung der Fall wäre. So läuft der Verdichter häufig genug, um auch eine ausreichende Kühlung des kälteren Fachs zu bewirken. Der Wirkungsgrad des Kältegerätes ist jedoch durch die zusätzliche Heizung erheblich beeinträchtigt.

Haushaltskältegeräte, bei denen die Drehzahl bzw. der Durchsatz des Verdichters variabel ist, sind z.B. aus US 5 711 159 A und US 6 769 265 B1 bekannt. Die Variabilität der Drehzahl erlaubt es, bei geringem Kühlungsbedarf eines Kältegerätes die Leistung des Verdichters herabzusetzen und so die Häufigkeit von die Energieeffizienz des Kältegerätes beeinträchtigenden Wechseln zwischen Ein- und Ausschaltphasen des Verdichters zu vermindern. Die in den genannten Dokumenten beschriebenen herkömmlichen Kältegeräte haben einen einzigen Verdampfer, der beide Lagerfächer kühlt, indem an ihm abgekühlte Luft auf die Lagerfächer entsprechend ihrem Kühlungsbedarf verteilt wird. Die hierfür erforderlichen Luftleitungen und Luftventile benötigen Platz im Inneren des Kältegerätes, der zur Lagerung von Kühlgut nicht mehr zur Verfügung steht. Nicht zuletzt tragen die diversen zur Verteilung der Kaltluft erforderlichen Vorrichtungen in nicht zu vernachlässigender Weise zu den Kosten eines solchen Gerätes bei. US 2003/131618 A1 offenbart ein Kältegerät gemäß dem Oberbegriff des Anspruchs 1.

Aufgabe der vorliegenden Erfindung ist, ein kompakt, einfach und preiswert realisierbares Kältegerät, insbesondere Haushaltskältegerät, mit hoher Energieeffizienz zu schaffen. Unter einem Kältegerät wird insbesondere ein Haushaltskältegerät verstanden, also ein Kältegerät das zur Haushaltsführung in Haushalten oder eventuell auch im Gastronomiebereich eingesetzt wird, und insbesondere dazu dient Lebensmittel und/oder Getränke in haushaltsüblichen Mengen bei bestimmten Temperaturen zu lagern, wie beispielsweise ein Kühlschrank, ein Gefrierschrank, eine Kühlgefrierkombination oder ein Weinlagerschrank.

Die Aufgabe wird durch ein Kältegerät, insbesondere Haushaltskältegerät, gemäß dem Anspruch 1 gelöst.

Den Durchsatz des Verdichters bei niedriger Umgebungstemperatur heraufzusetzen erscheint auf den ersten Blick widersinnig, denn der erhöhte Durchsatz geht einher mit einer höheren Leistungsaufnahme und einer erhöhten Kühlleistung, und die wird gerade bei niedriger Umgebungstemperatur nicht benötigt. Mit dem Durchsatz steigt aber auch der Druck am Ausgang des Verdichters, sodass eine niedrigere Verdampfungstemperatur erreicht werden kann. Diese niedrigere Verdampfungstemperatur hilft, eine unzureichende Kühlung des kalten Lagerfachs bei niedriger Umgebungstemperatur zu vermeiden.

Um solche niedrige Verdampfungstemperatur bevorzugt im dem kalten Lagerfach zugeordneten ersten Verdampfer zu erreichen, sollte dieser zweckmäßigerweise im Kältemittelkreislauf stromaufwärts vom zweiten Verdampfer angeordnet sein.

Wenn gemäß der vorliegenden Erfindung der Verdichter bei niedriger Umgebungstemperatur mit hohem Durchsatz betrieben wird, dann ist seine Kühlleistung zwangläufig größer als der mittlere Kühlungsbedarf der Lagerfächer. Es ist daher nicht zweckmäßig, wie bei den meisten bekannten Kältegeräten mit variablem Verdichterdurchsatz einen möglichst pausenlosen Betrieb des Verdichters anzustreben. Stattdessen ist der Verdichter hier vorzugsweise durch wenigstens einen an einem der Lagerfächer angeordneten ersten Temperaturfühler gesteuert ein- und ausschaltbar, wobei der eingeschaltete Zustand jeweils den Zeiten entspricht, zu denen der Durchsatz des Verdichters bei niedriger Umgebungstemperatur höher sein sollte als bei hoher Umgebungstemperatur.

Dieser Temperaturfühler kann insbesondere am warmen Lagerfach angeordnet sein.

Um den gewünschten Zusammenhang zwischen Umgebungstemperatur und Verdichterdurchsatz zu implementieren, sind diverse Ansätze denkbar. Einer davon ist, den Durchsatz des Verdichters unmittelbar durch einen Umgebungstemperaturfühler zu steuern.

Denkbar ist aber auch, einen zweiten Temperaturfühler am anderen Lagerfach vorzusehen. Wenn in diesem Fall einer der beiden Temperaturfühler Kühlungsbedarf im kalten Lagerfach erfasst, der andere aber keinen Kühlungsbedarf im warmen Lagerfach, dann ist dies ein Hinweis darauf, dass die Umgebungstemperatur niedrig ist und dass, um das kalte Lagerfach intensiver zu kühlen, ein Betrieb des Verdichters mit erhöhtem Durchsatz und dadurch reduzierter Verdampfungstemperatur wünschenswert ist.

Ein weiterer Ansatz erlaubt es, auf einen weiteren Temperaturfühler völlig zu verzichten: der Anteil von Einschaltphasen des Verdichters an der Gesamtbetriebszeit des Kältegerätes lässt einen Rückschluss auf den Gesamtkühlungsbedarf des ersten und zweiten Lagerfachs und damit auch auf die Umgebungstemperatur zu. Wenn der Anteil der Einschaltphasen an der Gesamtbetriebszeit des Kältegerätes gering ist, dann deutet dies auf eine niedrige Umgebungstemperatur hin, so dass zweckmäßigerweise in diesem Fall der Durchsatz des Verdichters während seiner nächsten Einschaltphase heraufgesetzt werden sollte.

Ein besonders einfacher Ansatz ist, den Durchsatz des Verdichters in einer Einschaltphase einfach anhand der Dauer einer vorhergehenden Ausschaltphase zu steuern: Je länger diese ist, umso niedriger muss die Umgebungstemperatur sein, und umso höher sollte dementsprechend der Durchsatz des Verdichters gewählt werden.

Weitere Merkmale und Vorteile der Erfindung werden deutlich anhand der nachfolgenden Beschreibung von Ausführungsbeispielen unter Bezugnahme auf die beigefügten Figuren. Aus dieser Beschreibung und den Figuren gehen auch Merkmale der Ausführungsbeispiele hervor, die nicht in den Ansprüchen erwähnt sind. Solche Merkmale können auch in anderen als den hier spezifisch offenbarten Kombinationen auftreten. Die Tatsache, dass mehrere solche Merkmale in einem gleichen Satz oder in einer anderen Art von Textzusammenhang miteinander erwähnt sind, rechtfertigt daher nicht den Schluss, dass sie nur in der spezifisch offenbarten Kombination auftreten können; stattdessen ist grundsätzlich davon auszugehen, dass von mehreren solchen Merkmalen auch einzelne weggelassen oder abgewandelt werden können, sofern dies die Funktionsfähigkeit der Erfindung nicht in Frage stellt. Es zeigen:
- Fig. 1: einen schematischen Querschnitt durch ein Haushaltskältegerät gemäß einer ersten Ausgestaltung der Erfindung;
- Fig. 2: ein Flussdiagramm eines von der Steuerschaltung des Kältegerätes der Fig. 1 ausgeführten Arbeitsverfahrens;
- Fig. 3: einen schematischen Querschnitt durch ein Haushaltskältegerät gemäß einer zweiten Ausgestaltung der Erfindung;
- Fig. 4: ein Flussdiagramm eines von der Steuerschaltung des Kältegerätes der Fig. 3 ausgeführten Arbeitsverfahrens;
- Fig. 5: einen schematischen Querschnitt durch ein Haushaltskältegerät gemäß einer dritten Ausgestaltung der Erfindung; und
- Fig. 6: ein Flussdiagramm eines von der Steuerschaltung des Kältegerätes der Fig- 5 ausgeführten Arbeitsverfahrens.

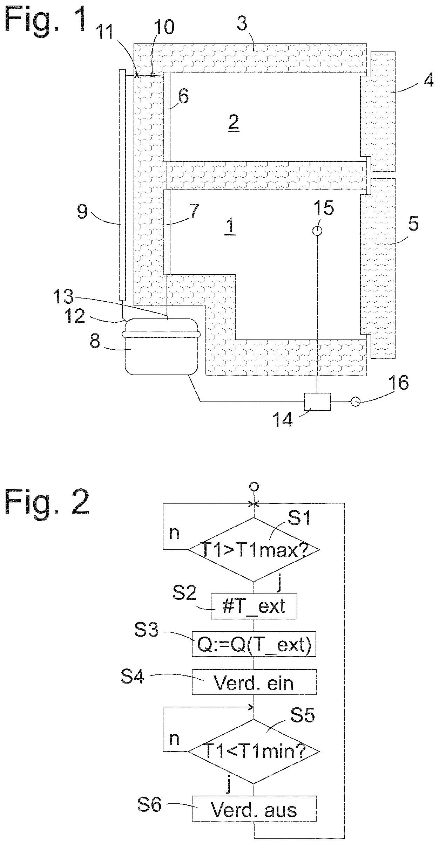

Das Gehäuse des in Fig. 1 schematisch dargestellten Kältegerätes umfasst einen Korpus 3 mit zwei unterschiedlich temperierten Lagerfächern, z.B. einem Normalkühlfach 1 als warmem Fach und einem Gefrierfach 2 als kaltem Fach. An dem Korpus 3 sind Türen 4, 5 zum Verschließen der Fächer 1, 2 angelenkt. An einer Rückwand jedes Fachs 1, 2 sind hier Verdampfer 6, 7 vom Coldwall-Typ dargestellt, doch könnten auch Nofrost-Verdampfer vorgesehen sein, ohne dass dies wesentliche Änderungen an den im Folgenden noch beschriebenen Besonderheiten der Erfindung erfordern würde.

Die Verdampfer 6, 7 sind zusammen mit einem Verdichter 8, einem Verflüssiger 9, einer Drosselstelle 10 und eventuell einem Absperrventil 11 Teil eines Kältemittelkreislaufs des Kältegerätes. Zwischen einem Druckanschluss 12 und einem Sauganschluss 13 des Verdichters 8 sind der Verflüssiger 9, die Drosselstelle 10, der Verdampfer 6 des Gefrierfachs 2 und der Verdampfer 7 des Normalkühlfachs 1 in Reihe verbunden, so dass flüssiges Kältemittel aus dem Verflüssiger 9 nur durch die Drosselstelle 10 und den Verdampfer 6 hindurch zum Verdampfer 7 gelangen kann. Das Absperrventil 11 ist an den Verdichter 8 gekoppelt und genau dann offen, wenn der Verdichter 8 eingeschaltet ist. Indem das Absperrventil 11 in den Ausschaltphasen des Verdichters 8 sperrt, bleibt ein hoher Druck im Verflüssiger 9 auch während der Ausschaltphasen des Verdichters 8 erhalten, sodass sofort nach dem Einschalten flüssiges Kältemittel am Ausgang der Drosselstelle 10 verfügbar ist.

Eine elektronische Steuerschaltung 14, vorzugsweise auf Mikroprozessorgrundlage, ist mit einem am Normalkühlfach 1 angeordneten Temperaturfühler 15 und einem Außentemperaturfühler 16 verbunden.

Fig. 2 veranschaulicht ein Arbeitsverfahren der Steuerschaltung 14. Das Verfahren wird zyklisch wiederholt, so dass die Festlegung eines Verfahrensschritts als Anfangsschritt im Prinzip willkürlich ist. Hier ist als Anfangschritt ein Schritt S1 des Auslesens des Temperaturfühlers 15 und des Vergleichen der von ihm erfassten Temperatur T1 des Normalkühlfachs 1 mit einer Einschaltgrenztemperatur T1max gewählt. Dieser Schritt S1 wird in einer Endlosschleife wiederholt, bis T1 die Einschaltgrenztemperatur T1max überschreitet. Sobald dies der Fall ist, fragt die Steuerschaltung 14 im Schritt S2 die Außentemperatur T_ext vom Außentemperaturfühler 16 ab. Unter Rückgriff auf eine z.B. in Form einer Nachschlagetabelle in einem Festwertspeicher der Steuerschaltung 14 abgelegte vorgegebene Funktion legt die Steuerschaltung 14 in Schritt S3 einen Solldurchsatz Q oder eine dem Solldurchsatz entsprechende Drehzahl des Verdichters 8 fest. Anschließend wird in Schritt S4 der Verdichter 8 eingeschaltet und mit dem festgelegten Solldurchsatz Q bzw. der festgelegten Drehzahl so lange betrieben, bis in Schritt S5 festgestellt wird, dass die Temperatur T1 im Normalkühlfach 1 unter eine Ausschaltgrenztemperatur T1min abgefallen ist. Wenn dies der Fall ist, wird in Schritt S6 der Verdichter 8 wieder ausgeschaltet, und das Verfahren kehrt zum Ausgang zurück.

Die in Schritt S3 verwendete Funktion Q(T_ext) ist eine abnehmende Funktion der Außentemperatur T_ext, die vom Hersteller des Kältegerätes für ein gegebenes Modell von Kältegerät spezifisch optimiert ist. Indem der Durchsatz Q mit abnehmender Außentemperatur T_ext ansteigt, wird eine umso niedrigere Verdunstungstemperatur des Kältemittels, insbesondere am Verdampfer 6 des Gefrierfachs 2, erzielt, je niedriger die Außentemperatur ist und je höher folglich der Anteil des Gefrierfachs 2 am Gesamtkältebedarf des Gerätes ist.

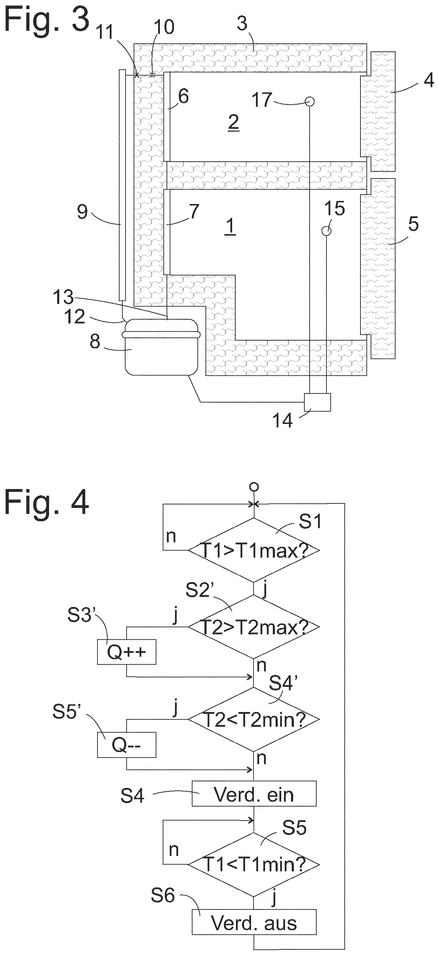

Bei dem Kältegerät der Fig. 3 ist der Außentemperaturfühler 16 entfallen und stattdessen ist ein Temperaturfühler 17 im Gefrierfach 2 mit der Steuerschaltung 14 verbunden.

Auch beim Arbeitsverfahren der Steuerschaltung 14 gemäß dieser Ausgestaltung wird zunächst in einer Endlosschleife S1 abgewartet, bis die Temperatur T1 des Normalkühlfachs über die Einschaltgrenztemperatur T1max angestiegen ist. Wenn dies der Fall ist, wird in Schritt S2 überprüft, ob auch die Temperatur T2 im Gefrierfach 2 bereits eine vorgegebene obere Grenztemperatur T2max überschritten hat. Wenn ja, so weist dies darauf hin, dass der Kühlungsbedarf des Gefrierfachs 2 nicht ausreichend gedeckt ist, bzw. dass die Außentemperatur geringer ist, als sie für eine ausreichende Kühlung des Gefrierfachs 2 sein sollte. Dem wird im Schritt S3' Rechnung getragen, indem der Sollwert Q des Durchsatzes des Verdichters 8 inkrementiert wird.

Denkbar wäre, bei diesem Verfahren in Schritt S1 jedes mal auch die Temperatur T2 des Gefrierfachs mit einer Einschaltgrenztemperatur T2max' zu vergleichen, die höher als T2max ist, und auch im Falle einer Überschreitung von T2max' zu Schritt S2 zu verzweigen. So kann selbst im Falle einer groben Fehlanpassung zwischen Sollwert Q und Umgebungstemperatur, deren Behebung eine große Zahl von Inkrementschritten und dementsprechend lange Zeit erfordern würde, eine katastrophale Erwärmung des Gefrierfachs 2 verhindert werden.

Umgekehrt könnte es auch sein, dass das Gefrierfach 2 stärker gekühlt wird als nötig, und dass infolgedessen dann, wenn die Temperatur T1 des Normalkühlfachs ihre Einschaltschwelle T1max überschreitet, die Temperatur T2 des Gefrierfachs 2 unterhalb einer tiefsten erwünschten Temperatur T2min liegt. Sollte sich in Schritt S4' herausstellen, dass dies der Fall ist, dann wird in Schritt S5' der Sollwert Q des Verdichterdurchsatzes dekrementiert. Befindet sich die Gefrierfachtemperatur T2 zwischen den Schwellwerten T2max und T2min, dann sind die Fächer 1, 2 korrekt aufeinander abgestimmt, und der Sollwert Q bleibt unverändert.

Nachdem wie oben beschrieben ggf. der Sollwert Q angepasst wurde, schließen sich die bereits mit Bezug auf Fig. 2 beschrieben Schritte S4, S5 und S6 an, und nach Ausschalten des Verdichters im Schritt S6 kehrt das Verfahren zum Ausgang S1 zurück.

Wie man sieht, ist bei diesem Verfahren keine gerätespezifische Sollwertfunktion wie etwa Q(T_ext) erforderlich. Der zur Implementierung dieser Ausgestaltung erforderliche Entwicklungsaufwand ist daher besonders gering.

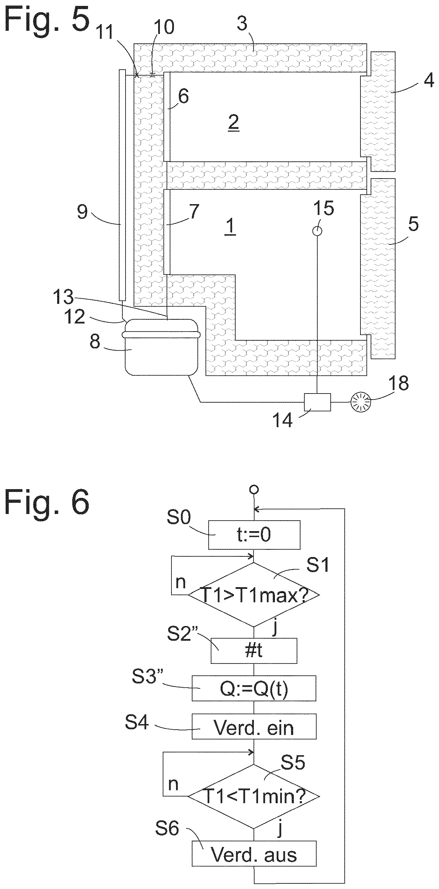

Das in Fig. 5 gezeigte Kältegerät verfügt nur über einen einzigen Temperaturfühler, nämlich den Fühler 15 im Normalkühlfach 1. Anstelle des Außentemperaturfühlers 16 oder des Gefrierfachfühlers 17 ist hier ein Zeitgeber 18 mit der Steuerschaltung 14 verbunden. Diese Ausgestaltung ist besonders preiswert realisierbar, da der Zeitgeber 18 basierend auf einen ohnehin benötigten Taktgeber der Steuerschaltung 14 so gut wie kostenneutral realisierbar ist und der Verdrahtungsaufwand eines zweiten Temperaturfühlers entfällt. Das Arbeitsverfahren der Steuerschaltung 14 gemäß dieser Ausgestaltung ähnelt stark demjenigen der Fig. 2. In einem vorbereitenden Schritt S0 wird der Zeitgeber t auf null gesetzt. Es schließt sich der Schritt S1 des Vergleichens der Temperatur T1 des Normakühlfachs 1 mit der Einschaltgrenztemperatur T1max an. Wiederum wird dieser Schritt in einer Endlosschleife wiederholt, bis die Bedingung erfüllt ist. In Schritt S2" wird dann der Wert des Zeitgebers t abgefragt, und in Schritt S3 wird der Sollwert Q des Verdichterdurchsatzes als Funktion des Zeitgeberwertes t festgelegt. Darauf folgen wiederum dieselben Schritte S4, S5 und S6 wie bei den Verfahren der Fig. 2 und 4.

Die Funktion Q(t) ist wiederum eine spezifisch für das jeweilige Modell des Kältegerätes optimierte Funktion, wobei der Wert von Q mit t zunimmt, d.h. Q wird für jede Einschaltphase umso größer gewählt, je länger die vorhergehende Ausschaltphase des Verdichters 8 vom Schritt S6 bis zum darauffolgenden Schritt S2" gedauert hat. Diese Zeit ist wiederum offensichtlich umso länger, je niedriger die Umgebungstemperatur ist.

Da die Dauer einer Einschaltphase des Verdichters 8 im Wesentlichen unabhängig von der Umgebungstemperatur ist und mit zunehmendem Durchsatz Q eher noch abnimmt, kann man beim Verfahren der Fig. 6 auch sagen, dass Q umso höher ist, je kürzer der Anteil der Einschaltphasen des Verdichters 8 an der Gesamtbetriebszeit des Kältegerätes ist.

## Patentansprüche

1. Kältegerät, insbesondere Haushaltskältegerät, mit einem Kältemittelkreislauf, in dem ein Verdichter (8) mit wenigstens einem ersten Verdampfer (6), der einem kalten Lagerfach (2) zugeordnet ist, einem Mittel zum Erfassen der Umgebungstemperatur, und einem einem warmen Lagerfach (1) zugeordneten zweiten Verdampfer (7) verbunden ist, **dadurch gekennzeichnet, dass** eine Steuerschaltung (14) eingerichtet ist, den Verdichter (8) mit variablem Durchsatz (Q) zu betreiben, und zwar ihn bei niedriger Umgebungstemperatur zeitweilig mit höherem Durchsatz als bei hoher Umgebungstemperatur zu betreiben.

2. Kältegerät nach Anspruch 1, **dadurch gekennzeichnet, dass** der die Steuerschaltung (14) mit wenigstens einem an einem (2) der Lagerfächer angeordneten ersten Temperaturfühler (15) verbunden ist, um anhand der von ihm erfassten Temperatur den Verdichter ein- und auszuschalten und eingerichtet ist, den Durchsatz (Q) im eingeschalteten Zustand bei niedriger Umgebungstemperatur höher ist als bei hoher Umgebungstemperatur zu wählen.

3. Kältegerät nach Anspruch 2, **dadurch gekennzeichnet, dass** der Temperaturfühler (15) am warmen Lagerfach (2) angeordnet ist.

4. Kältegerät nach einem der Ansprüche 1 bis 3, **dadurch gekennzeichnet, dass** das Mittel zum Erfassen der Umgebungstemperatur ein Umgebungstemperaturfühler (16) ist und der Durchsatz (Q) des Verdichters (8) durch diesen Umgebungstemperaturfühler (16) gesteuert (S3) ist.

5. Kältegerät nach Anspruch 2 oder 3, **dadurch gekennzeichnet, dass** der Durchsatz (Q) des Verdichters (8) durch einen am anderen Lagerfach (1) angeordneten zweiten Temperaturfühler (17) gesteuert (S2' - S5') ist.

6. Kältegerät nach Anspruch 1, 2 oder 3, **dadurch gekennzeichnet, dass** der Durchsatz des Verdichters (8) anhand des Anteils von Ein- oder Ausschaltphasen des Verdichters (8) an der Gesamtbetriebszeit des Kältegeräts gesteuert (S0, S3") ist.

7. Kältegerät nach Anspruch 1, 2 oder 3, **dadurch gekennzeichnet, dass** der Durchsatz des Verdichters (8) in einer Einschaltphase anhand der Dauer (t) einer vorhergehenden Ausschaltphase gesteuert (S0, S3") ist.

8. Kältegerät nach einem der vorhergehenden Ansprüche, **dadurch gekennzeichnet, dass** der erste Verdampfer (6) im Kältemittelkreislauf stromaufwärts vom zweiten Verdampfer (7) angeordnet ist.

## Claims

1. Refrigeration appliance, in particular household refrigeration appliance, with a refrigerant circuit, in which a compressor (8) is connected to at least one first evaporator (6), which is assigned to a cold storage compartment (2), a means for capturing the ambient temperature, and a second evaporator (7) assigned to a warm storage compartment (1), **characterised in that** a control circuit (14) is designed to operate the compressor (8) with a variable throughput (Q), namely to operate the same at a low ambient temperature intermittently with a higher throughput than with a high ambient temperature.

2. Refrigeration appliance according to claim 1, **characterised in that** the control circuit (14) is connected to at least one first temperature sensor (15) arranged on one (2) of the storage compartments in order, on the basis of the temperature captured thereby, to switch the compressor on and off and is set up to select the throughput (Q) in the switched-on state at a low ambient temperature to be higher than with a high ambient temperature.

3. Refrigeration appliance according to claim 2, **characterised in that** the temperature sensor (15) is arranged on the warm storage compartment (2).

4. Refrigeration appliance according to one of claims 1 to 3, **characterised in that** the means for capturing the ambient temperature is an ambient temperature sensor (16) and the throughput (Q) of the compressor (8) is controlled (S3) by this ambient temperature sensor (16).

5. Refrigeration appliance according to claim 2 or 3, **characterised in that** the throughput (Q) of the compressor (8) is controlled (S2' - S5') by a second temperature sensor (17) arranged on the other storage compartment (1).

6. Refrigeration appliance according to claim 1, 2 or 3, **characterised in that** the throughput of the compressor (8) is controlled (S0, S3") on the basis of the portion of switch-on or switch-off phases of the compressor (8) in the overall operating time of the refrigeration appliance.

7. Refrigeration appliance according to claim 1, 2, or 3, **characterised in that** the throughput of the compressor (8) is controlled (S0, S3") in a switch-on phase on the basis of the duration (t) of a preceding switch-off phase.

8. Refrigeration appliance according to one of the preceding claims, **characterised in that** the first evaporator (6) is arranged in the refrigerant circuit upstream of the second evaporator (7).

## Revendications

1. Appareil frigorifique, notamment appareil frigorifique à usage domestique, comprenant un circuit réfrigérant dans lequel un compresseur (8) est relié à au moins un premier évaporateur (6) qui est affecté à un compartiment de stockage (2) froid, comprenant un moyen destiné à capter la température ambiante et deuxième évaporateur (7) affecté à un compartiment de stockage (1) chaud, **caractérisé en ce qu'**un circuit de commande (14) est configuré pour faire fonctionner le compresseur (8) avec un débit variable (Q), et à savoir, à température ambiante basse, pour le faire fonctionner temporairement avec un débit plus élevé qu'à température ambiante élevée.

2. Appareil frigorifique selon la revendication 1, **caractérisé en ce que** le circuit de commande (14) est relié à au moins une première sonde de température (15) disposée sur l'un (2) des compartiments de stockage afin de mettre le compresseur en marche et de l'arrêter à l'aide de la température captée par elle, et est configuré pour sélectionner le débit (Q), à l'état en marche à température ambiante basse, de manière plus élevée qu'à température ambiante élevée.

3. Appareil frigorifique selon la revendication 2, **caractérisé en ce que** la sonde de température (15) est disposée sur le compartiment de stockage (2) chaud.

4. Appareil frigorifique selon l'une quelconque des revendications 1 à 3, **caractérisé en ce que** le moyen destiné à capter la température ambiante est une sonde de température ambiante (16) et **en ce que** le débit (Q) du compresseur (8) est commandé (S3) au moyen de cette sonde de température ambiante (16).

5. Appareil frigorifique selon la revendication 2 ou 3, **caractérisé en ce que** le débit (Q) du compresseur (8) est commandé (S2' - S5') au moyen d'une deuxième sonde de température (17) disposée sur l'autre compartiment de stockage (1).

6. Appareil frigorifique selon les revendications 1, 2 ou 3, **caractérisé en ce que** le débit du compresseur (8) est commandé (S0, S3") à l'aide de la proportion de phases de mise en marche ou d'arrêt du compresseur (8) par rapport au temps total de fonctionnement de l'appareil frigorifique.

7. Appareil frigorifique selon les revendications 1, 2 ou 3, **caractérisé en ce que** le débit du compresseur (8), pendant une phase de mise en marche, est commandé (S0, S3") à l'aide de la durée (t) d'une phase d'arrêt précédente.

8. Appareil frigorifique selon l'une quelconque des revendications précédentes, **caractérisé en ce que** le premier évaporateur (6) est disposé dans le circuit réfrigérant en amont du deuxième évaporateur (7).
